# EUROPÄISCHE PATENTSCHRIFT

(11) **EP 2 611 552 B1**
(45) Veröffentlichungstag und Bekanntmachung des Hinweises auf die Patenterteilung: **12.10.2016**
(21) Anmeldenummer: 11758154.6
(22) Anmeldetag: 31.08.2011
(51) Int. Cl.: B08B 1/04, B08B 3/02, B62B 5/00, B62B 5/06, B08B 5/02, B60S 3/00

(54) **MOBILES REINIGUNGSSYSTEM**
MOBILE CLEANING SYSTEM
SYSTÈME DE NETTOYAGE MOBILE

(30) Priorität: 01.09.2010 DE 202010008432 U
(43) Veröffentlichungstag der Anmeldung: 10.07.2013
(73) Patentinhaber: Trolley Wash Services GmbH, 6134 Vomp (AT)
(72) Erfinder: FEISTMANTL, Manfred, A-6123 Terfens (AT)
(74) Vertreter: Kiwit, Benedikt
(86) Internationale Anmeldenummer: PCT/EP2011/064952
(87) Internationale Veröffentlichungsnummer: WO 2012/028634

(56) Entgegenhaltungen:
- DE-A1- 19 857 915
- DE-A1-102006 010 404

## Beschreibung

Die Erfindung bezieht sich allgemein auf den Bereich verfahrenstechnischer Reinigungsanlagen, insbesondere auf mobile Reinigungssysteme für zu reinigende Teile, wie beispielsweise Einkaufswagen oder sonstige Behälter aller Art, sowie ein Verfahren zum Bereitstellen derselben, wobei das mobile Reinigungssystem einen auf den Boden absetzbaren Container mit einer Reinigungsvorrichtung aufweist.

Wenn im Folgenden von Einkaufswagen die Rede ist, so sind damit Transportbehältnisse gemeint, die heute hauptsächlich in größeren Läden, Lebensmittelgeschäften und Supermärkten eingesetzt werden, um den Kunden den Transport der im Geschäft ausgesuchten Waren zur Kasse und ggf. den Transport der an der Kasse bezahlten Waren zu einem vor dem Geschäft geparkten Transportfahrzeug zu erleichtern. Aufgrund der häufigen Benutzung sowie in Folge von in den Einkaufswagen als Restmüll zurückgebliebenen Warenrückständen werden diese Einkaufswagen innerhalb kurzer Zeit schmutzig, sodass es aus hygienischen und gesundheitlichen Gründen notwendig ist, benutzte Einkaufswagen in regelmäßigen Zeitabständen einer gründlichen Reinigung zu unterziehen, um den Lebensmittel-Hygienebestimmungen Rechnung zu tragen.

Die Erfindung bezieht sich gleichermaßen auf die Reinigung von Fahrzeugen, Lager- und/oder Transportbehältnissen für Waren, Güter und Gegenstände aller Art wie Einkaufskörbe, Einkaufswagen, Servierwagen, (Getränke-)Kästen, Kisten, Fässer, Kessel, Tanks, Mülltonnen und/oder sonstige Behälter aller Art.

Während früher Einkaufswagen noch manuell unter Zuhilfenahme chemischer Reinigungsmittel geschrubbt und gewaschen werden mussten, werden heute in zunehmendem Maße vollautomatische Reinigungsanlagen verwendet, die den Reinigungsprozess wesentlich effizienter durchführen und somit eine große Erleichterung darstellen. Zudem kann bei Einsatz vollautomatisch arbeitender Reinigungsanlagen ein Großteil des in einem Geschäft angestellten Reinigungspersonals eingespart werden.

Da sich die zu reinigenden Einkaufswagen verschiedener Geschäfte an unterschiedlichen Orten befinden und vor Ort gereinigt werden müssen, ist es erforderlich, dass die automatische Reinigungsanlage zu den jeweiligen Einsatzorten transportiert werden kann.
Herkömmliche mobile Reinigungs- bzw. Waschanlagen für Einkaufswagen aller Art verfügen in der Regel über mindestens eine Reinigungsstation, eine Wasserwiederaufbereitungsanlage mit Pumpen, Ventilen, Filtern, Rohrleitungen, Behältern und/oder Messgeräten, einer Regelungs- und Steuerungseinheit, ein Gehäuse, in dem die aufgezählten Komponenten installiert sind, sowie eine Transportvorrichtung, auf der das Gehäuse befestigt ist.

Gemäß dem Stand der Technik sind verschiedene Lösungen für das Problem der automatischen Reinigung von Einkaufswagen verfügbar, wobei jede dieser Lösungen für einen speziellen Anwendungszweck optimiert ist. Mit jeder dieser Lösungen sind daher bestimmte Einschränkungen verbunden. Um einige der wichtigsten dieser Lösungen ansatzweise erklären zu können, ist es notwendig, kurz auf ihre wichtigsten Aspekte einzugehen.

Die in der deutschen Offenlegungsschrift DE 198 57 915 A1 vorgeschlagene Erfindung bezieht sich auf eine mobile Reinigungs- bzw. Waschanlage für Einkaufswagen aller Art, wobei eine Waschbox zusammen mit einer Reinigungsflüssigkeit- oder Wasseraufbereitungsanlage durch Verbindungsleitungen auf einem Grundgestellt montiert ist, welches wiederum auf einer Transportvorrichtung befestigt ist. Zur Reinigung der Einkaufswagen wird die mobile Reinigungs- bzw. Waschanlage am gewünschten Einsatzort entweder von der Transportvorrichtung auf dafür vorgesehenen Stützen des Grundgestells abgestellt, oder sie verbleibt auch während des Reinigungsbetriebs auf der Transportvorrichtung. In beiden Fällen ist die Anlage vertikal von dem Boden beabstandet und es werden beispielsweise Rampen, hier in Form der Türen, benötigt, um den Einkaufswagen in die Anlage einzuführen. Zudem sind alle Bauteile, inklusive der Flüssigkeitsbehälter sowie Aufbereitungsanlage und sonstige Geräte, auf dem von der Transportvorrichtung separierbaren Grundgestell angeordnet.

Die deutsche Gebrauchsmusteranmeldung DE 299 01 282 U1 betrifft ein Waschsystem für Einkaufswagen, das mit einer eigenen Energieversorgungseinheit ausgerüstet ist. Dabei kann es sich vorzugsweise um ein Dieselaggregat handeln, das elektrischen Strom erzeugt, um die in dem offenbarten Waschsystem enthaltenen elektrischen, pneumatischen sowie hydraulischen Komponenten betreiben zu können. Das Waschsystem verfügt außerdem über eine Säuberungskomponente, die die verwendete Reinigungsflüssigkeit derart säubert, dass diese nicht so oft ausgewechselt werden muss. Darüber hinaus ist eine Gebläselufttrocknung integriert, um die Einkaufswägen nach der Wäsche zu trocknen. Ferner weist das Waschsystem auch Komponenten auf, die eine Schmierung der Räder und Radachsen bewerkstelligen. Das Waschsystem besteht aus einem Gestell, das einem mobilen Anhänger gleicht, wobei in ihrem Boden herkömmliche Führungsschienen vorhanden sind, mit denen der Frachtcontainer während des Transports mit der Lastkraftwageneinheit verbunden ist. Der Frachtcontainer ist an seinen Seiten mit Füßen ausgerüstet, die mittels Hydraulikzylindern angehoben und abgesenkt werden können. Ist das Waschsystem an seinem zu bestimmenden Ort, so kann das Gestellteil unter Anwendung der Füße angehoben werden, sodass die Lastkraftwageneinheit weggefahren und anschließen das Gestell zum Boden gesenkt werden kann. Der Container ist somit unabhängig von der Lastkraftwageneinheit einsetzbar.

In der deutschen Patentschrift DE 102 51 165 B4 ist eine Reinigungsvorrichtung für Einkaufswagen offenbart, in der Einkaufswagen in einem Behälter mittels einer Reinigungsflüssigkeit mit Flüssigkeitsstrahlen besprüht werden, wobei der Behälter mittels eines Fahrzeugs zu den einzelnen Einsatzorten transportierbar ist. Der die Reinigungsvorrichtung aufnehmende Behälter ist ein Container, der mittels eines Fahrzeugs transportierbar und von dem Fahrzeug absetzbar ist, vorzugsweise bis auf etwa Bodenhöhe und unabhängigen hiervon zwischen den Hinterrädern des Fahrzeugs. Mit anderen Worten wird der Container in bekannter Weise entlang der Längsachse des Fahrzeugs hinter diesem abgesetzt. Das Abstellen erfolgt vorzugsweise im Fahrzeugbereich des LKWs, um die während des Betriebes bestehen bleibenden Verbindungen zwischen LKW und Container kurz zu halten. Der absetzbare Container weist neben der Transport-Förder-Einrichtung zudem sämtliche Versorgungseinheiten der Reinigungsvorrichtung auf, wie beispielsweise Frischwassertanks, Tanks mit Reinigungsmitteln, Wasserauffangbecken und Becken für Wasserrücklauf, Luftbehälter sowie Behälter für aufzutragende Imprägniermittel.

Es ist eine Aufgabe der Erfindung, ein kostengünstiges, leicht zu realisierendes, kompaktes und mobiles Reinigungssystem für zu reinigende Teile wie Transportbehältnisse, beispielsweise Einkaufswägen, sowie ein Verfahren zum Bereitstellen desselben bereitzustellen, das platzsparend und leicht bei gleichzeitigem Erhalt der vollen Waschleistung in für die zu reinigenden Teile leicht zugänglicher Weise bereitgestellt werden kann.

Diese Aufgabe wird durch die Merkmale der unabhängigen Patentansprüche gelöst. Die abhängigen Ansprüche bilden den zentralen Gedanken der Erfindung in vorteilhafter Weise weiter.

Gemäß der Erfindung wird ein mobiles Reinigungssystem für zu reinigende Teile bereitgestellt, welches aufweist: einen ersten Container, welcher eine erste Reinigungsvorrichtung aufweist, einen zweiten Container mit einer Versorgungseinheit, die mit der ersten Reinigungsvorrichtung über Leitungen ständig verbunden ist, und einen mobilen Träger, auf dem der erste Container und der zweite Container vorgesehen sind. Wenigstens der erste Container ist seitlich neben dem mobilen Träger und parallel zu dessen Längsachse sowie unabhängig von dem zweiten Container derart absetzbar, dass er mit dem Boden in Berührung kommt. Mit anderen Worten ist er auf dem Boden absetzbar.

Da die Versorgungseinheit in einem zweiten Container auf dem mobilen Träger vorgesehen ist, die nicht mit dem ersten Container, aufweisend die erste Reinigungsvorrichtung, verbunden ist, kann der erste Container mit der Reinigungsvorrichtung deutlich kleiner und leichter ausgebildet werden. Somit ist der benötigte Raum zum Absetzen des Containers deutlich verkleinert. Da zudem der Container seitlich neben dem mobilen Träger abgesetzt wird, wird überdies noch weniger Raum benötigt als wenn der Container, wie im Stand der Technik, hinter dem Fahrzeug abgesetzt wird. Dies ist deswegen der Fall, da die Quererstreckung entsprechender Container geringer ist als dessen Längserstreckung. Die Versorgungseinheit kann somit auf dem mobilen Träger verbleiben und ist ständig über Leitungen mit der Reinigungsvorrichtung verbunden, sodass die erste Reinigungsvorrichtung über diese Leitungen ohne Reinigungsverluste betrieben werden kann.

Zudem ist der erste Container, da in diesem die Versorgungseinheit nicht vorgesehen ist, deutlich leichter, sodass eine entsprechende Vorrichtung zum Absetzen des Containers kleiner und energiesparender ausgeführt werden kann.

Da zudem der erste Container auf dem Boden abgesetzt wird, können die zu reinigenden Teile ohne Probleme in den ersten Container und somit durch die erste Reinigungsvorrichtung befördert werden. Somit können insbesondere Einkaufswagen, die im Pulk dem mobilen Reinigungssystem zugeführt bzw. nach erfolgter Reinigung wieder abgeführt werden, effizient und schnell gereinigt werden, ohne diese über zusätzliche Rampen oder Hebebühnen zunächst auf das Höhenniveau der Reinigungsvorrichtung anzuheben.

Es kann ferner vorgesehen werden, dass die dem mobilen Reinigungssystem im Pulk zugeführten, zu reinigenden Einkaufswagen automatisch getrennt und die aus dem System wieder im Pulk abgeführten, gereinigten Einkaufswagen automatisch gestapelt werden können. Das mobile Reinigungssystem ist dabei für einen komplett unabhängigen Betrieb zur Reinigung von ca. 2000 Einkaufswagen geeignet.

Alternativ kann auch vorgesehen sein, dass die zu reinigenden Teile manuell durch den Bediener oder halbautomatisch einzeln oder im Pulk in die Anlage eingeführt und/oder nach dem Reinigungsvorgang aus der Anlage einzeln oder im Pulk abgeführt werden.

Vorzugsweise weist der zweite Container ferner wenigstens eine zweite Reinigungsvorrichtung auf, die mit der Versorgungseinheit über Leitungen ständig verbunden ist. Es ist somit möglich, neben der ersten Reinigungsvorrichtung zusätzliche Reinigungsvorrichtungen vorzusehen. Auf diese Weise ist es möglich, neben der eigentlichen Reinigung in der ersten Reinigungsvorrichtung weitere Reinigungsvorgänge am Einsatzort unabhängig von oder zusätzlich zu der ersten Reinigungsvorrichtung auszuführen.

Wenigstens der die zweite Reinigungsvorrichtung aufweisende Teil des zweiten Containers kann ebenfalls seitlich neben dem mobilen Träger und parallel zu dessen Längsachse derart absetzbar sein, dass er mit dem Boden in Berührung kommt, also auf dem Boden absetzbar ist. Somit ist auch die zweite Reinigungsvorrichtung leicht zugänglich. Da überdies insbesondere nur der Teil des zweiten Containers, der die zweite Reinigungseinheit (oder auch weitere Reinigungseinheiten) aufweist, abgesetzt wird, verbleibt die Versorgungseinheit weiterhin auf dem mobilen Träger. Somit ist die zweite Reinigungseinheit besonders leicht und kompakt ausgebildet und kann auf besonders kleinem Raum neben dem Fahrzeug einfach abgesetzt werden, während die volle Reinigungsleistung aufgrund der bestehenden Leitungsverbindung zu der Versorgungseinheit aufrechterhalten bleibt. Im Wesentlichen gelten hier die gleichen Vorteile wie bei dem oben beschriebenen, absetzbaren ersten Container.

Vorzugsweise sind der erste Container und wenigstens der die zweite Reinigungsvorrichtung aufweisende Teil des zweiten Containers auf gegenüberliegenden Seiten des mobilen Trägers absetzbar. Somit ist es möglich, auf besonders kompaktem Raum einerseits eine Reinigungsvorrichtung, wie beispielsweise eine Durchlaufwaschanlage für unterschiedliche Reinigungsgüter frei zugänglich zur Verfügung zu stellen, während zudem weitere Reinigungsvorrichtungen ebenfalls leicht zugänglich vorgesehen sind.

Die zweite Reinigungsvorrichtung weist dazu vorzugsweise weitere (bspw. tragbare) Reinigungsgeräte, wie z. B. Hochdruckreiniger, Bodenreinigungsmaschinen, Trockeneis- und Trockendampfgeräte und dergleichen auf. Somit ist es beispielsweise möglich, während der Reinigung der zu reinigenden Teile in der ersten Reinigungsvorrichtung gleichzeitig andere Reinigungsvorgänge vor Ort zu erledigen, wie beispielsweise die Reinigung von Werbeschildern und dergleichen, oder es ist auch möglich, die zu reinigenden Teile mit der zweiten Reinigungsvorrichtung vor- bzw. nach zu behandeln.

Vorzugsweise ist das mobile Reinigungssystem derart ausgebildet, dass der erste Container und der zweite Container sich jeweils entlang der Längsachse des mobilen Trägers erstrecken, wobei die Längsachse des ersten Containers auf einer der rechten oder linken Seite bzgl. der Längsachse des mobilen Trägers und die Längsachse des zweiten Containers auf der anderen der linken oder rechten Seite bzgl. der Längsachse des mobilen Trägers angeordnet ist. Somit sind die beiden Container seitlich nebeneinander auf dem mobilen Träger angeordnet und ein Absetzen derselben auf jeweils gegenüberliegenden Seiten ist vereinfacht, während gleichzeitig die erste und die zweite Reinigungsvorrichtung optimal ausgebildet werden können. Da der erste Container mit der ersten Reinigungsvorrichtung auf einer Seite angeordnet ist, auf der nicht die Versorgungseinheit oder andere Reinigungsvorrichtungen ausgebildet sind, kann ausreichend Platz für die Reinigungsstraße zur Verfügung gestellt werden.

Um die Container seitlich neben dem mobilen Träger und parallel zu dessen Längsachse auf dem Boden absetzsetzen zu können, weist das mobile Reinigungssystem einen Absetzmechanismus auf. Dieser Absetzmechanismus ist vorzugsweise als Hydraulikvorrichtung ausgebildet, sodass über einen einfachen Hydraulikmechanismus bspw. mittels hydraulischer und verschwenkbarer Arme der bzw. die Container(-teile) sicher und einfach von dem mobilen Träger auf den Boden und umgekehrt bewegt werden können.

Vorzugsweise bleiben die abgesetzten Container bzw. Teile der Container mit dem mobilen Träger verbunden, vorzugsweise mittels des Absetzmechanismus. Aufgrund der dauerhaften Verbindung des bzw. der Container mit dem mobilen Träger wird es ermöglicht, dass die mobile Reinigungsvorrichtung auch zu Zeiten des geregelten Feiertags- und Sonntagsfahrverbots für LKWs eingesetzt werden kann.

Beispielsweise ist die erste Reinigungsvorrichtung als Waschtunnel ausgebildet und weist vorzugsweise mehrere Vorrichtungen zum automatisieren Reinigen der zugeführten Teile auf. Mittels einer Reinigung in einem Waschtunnel bzw. einer Durchlaufwaschstraße wird eine einfache und schnelle Vorrichtung zum taktweisen Reinigen besonders vieler Teile zur Verfügung gestellt. Damit die zu reinigenden Teile durch die erste Reinigungsvorrichtung, wie beispielsweise den Waschtunnel, geführt werden können, weist die erste Reinigungsvorrichtung zudem vorzugsweise eine Beförderungsvorrichtung auf, vorzugsweise eine automatische boden- und/oder deckenseitige Beförderungsvorrichtung. Die Erfindung ist jedoch nicht auf bodenseitige Förderer beschränkt. Beispielsweise kann, je nach zu behandelnden Teilen, die Beförderungsvorrichtung als Kettenförderer, Bandförderer, Hängeförderer, Linearführung oder auf sonstige bekannte Weise ausgeführt sein.

Zum Einbringe und zum Ausgeben der zu reinigenden Teile in bzw. aus der ersten Reinigungsvorrichtung weist diese einen Einlass und einen Auslass auf.

Vorzugsweise sind der Einlass und der Auslass auf unterschiedlichen, besonders vorzugsweise auf sich gegenüberliegenden Seiten des ersten Containers angeordnet. Insbesondere können Ein- und Auslass dann derart angeordnet sein, dass eine Durchlaufwaschanlage in Förderrichtung längs zur Längsachse des mobilen Trägers und vorzugsweise horizontal zum Boden ausgerichtet gebildet ist.

Alternativ ist es jedoch auch denkbar, dass, insbesondere bei kleinen zu reinigenden Teilen, der Einlass und der Auslass auf derselben Seite des ersten Containers vorgesehen sind. In dieser Ausführungsform wäre die Beförderungsvorrichtung dann vorzugsweise in einem im Wesentlichen horizontalen (und ggf. auch teilweise vertikalen), kurvigen Pfad (bspw. U-förmig) ausgebildet zur vorzugsweise kontinuierlichen Beförderung der zu reinigenden Teile durch die erste Reinigungsvorrichtung. Diese Ausgestaltungsform hat den Vorteil, dass das mobile Reinigungssystem auf einfache Weise von nur einer Person bedient werden kann.

Die Versorgungseinheit weist vorzugsweise die folgenden Teile auf: Tanks für Frischwasser, Brauchwasser, Reinigungsmittel, Desinfektionsmittel, Schmiermittel und Heizöl sowie eine Pumpentechnik und einen Stromgenerator; vorzugsweise auch eine Wasserwiederaufbereitungsanlage und eine Warmwasseraufbereitung (vorzugweise einen Durchlauferhitzer) zur Warmwassererzeugung. Die mit den absetzbaren Containern bzw. Containerteilen verbundenen Leitungen der Versorgungseinheit umfassen folglich Zu- und Abführleitungen für Fluide (Frischwasser, Brauchwasser, Reinigungsmittel, Desinfektionsmittel, Schmiermittel, Heizöl, Heißluft und ggf. Kühlluft) sowie elektrische Leitungen. Es ist somit möglich, alle schweren Teile des Reinigungssystems, deren Fluide beispielsweise auch mittels Leitungen den Reinigungsvorrichtungen zugeführt werden können, auf dem mobilen Reinigungssystem zu belassen. Somit können die absetzbaren Teile des Systems deutlich leichter ausgebildet werden und der gewonnene Raum kann weiter genutzt oder die Reinigungsvorrichtung an sich kompakter und kleiner ausgebildet werden.

Der mobile Träger ist vorzugsweise ein Fahrzeug, besonders vorzugsweise ein Transporter oder Klein-Lastkraftwagen mit einem zulässigen Gesamtgewicht von maximal 12 Tonnen, vorzugsweise maximal 7,5 Tonnen. Auf diese Weise ist es möglich, das mobile Reinigungssystem besonders klein, kompakt und leicht auszubilden. Somit kann das Reinigungssystem auch an für größere Fahrzeuge schwer oder gar nicht zugänglichen Orten (bspw. Supermärkte in der Innenstadt) eingesetzt werden. Insbesondere fällt ein derartiges mobiles Reinigungssystem nicht unter die in Deutschland herrschende Mautpflicht und ist somit besonders attraktiv für den mobilen Einsatz ausgebildet.

Das erfindungsgemäße mobile Reinigungssystem ist beispielsweise auch vorteilhaft für die Reinigung von Fahrzeugen, Lager- und/oder Transportbehältnissen für Waren, Güter und Gegenstände aller Art wie Einkaufskörbe, Einkaufswagen, Servierwagen, Getränkekästen, Kisten, Fässer, Kessel, Tanks, Mülltonnen und/oder Behälter aller Art geeignet.

Im Folgenden wird die Erfindung anhand eines Ausführungsbeispiels gemäß den Zeichnungen der begleitenden Figuren beschrieben.
- Figur 1a: zeigt eine Draufsicht auf das mobile Reinigungssystem gemäß der Erfindung.
- Figur 1b: zeigt eine Rückansicht des mobilen Reinigungssystems nach Figur 1a.
- Figur 2a: zeigt eine Draufsicht auf das mobile Reinigungssystem gemäß der Erfindung mit abgesetztem ersten Container.
- Figur 2b: zeigt eine Rückansicht des mobilen Reinigungssystems nach Figur 2a.

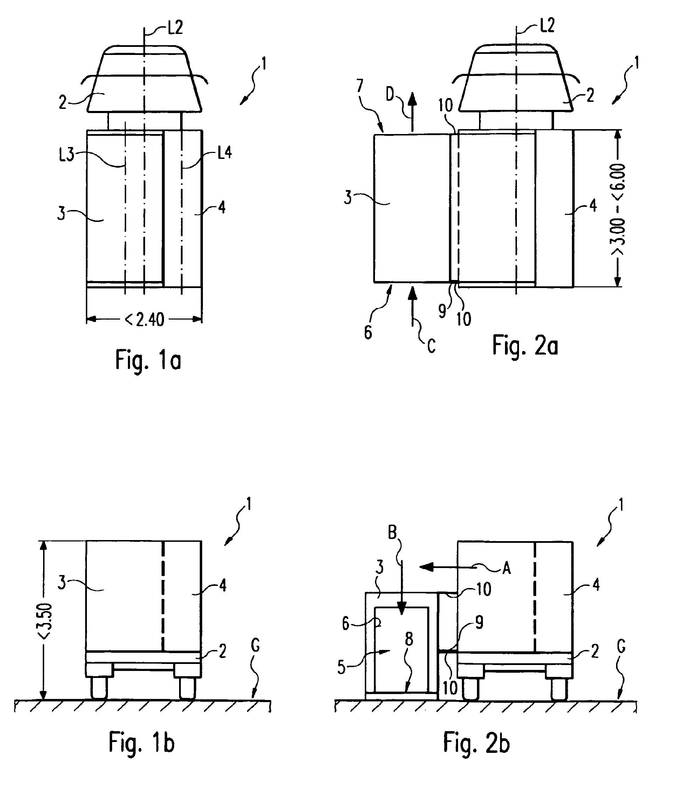

Die Figuren zeigen das erfindungsgemäße mobile Reinigungssystem 1. Das mobile Reinigungssystem 1 weist einen mobilen Träger 2 auf, auf dem ein erster Container 3 sowie ein zweiter Container 4 vorgesehen sind. Der mobile Träger 2 ist vorzugsweise ein Fahrzeug insbesondere mit einem Antrieb wie bspw. einem Verbrennungsmotor. Vorzugsweise ist das Fahrzeug ein Transporter oder Kleinlastkraftwagen mit einem zulässigen Gesamtgewicht von maximal 12 Tonnen, vorzugsweise maximal 7,5 Tonnen. Ein derartiges Fahrzeug fällt insbesondere nicht unter die in Deutschland herrschende Mautpflicht und ist somit besonders attraktiv für den Einsatz als mobiles Reinigungssystem. Zudem ist es in dieser Größenordnung von Fahrzeugen möglich, ein kleines und kompaktes mobiles Reinigungssystem zur Verfügung zu stellen, welches einerseits zu schwer zugänglichen Einsatzorten befördert werden kann und welches andererseits dennoch ausreichend Platz für ein effektives Reinigungssystems bietet. Dazu hat die auf dem Fahrzeug angeordnete Kombination der beiden Container 3, 4 vorzugsweise eine Breite von maximal 2,4m (vgl. Fig. 1a), eine Länge von mindestens 3m bis maximal 6m (vgl. Fig. 2a) sowie eine Höhe vom Boden G von maximal 3,5m (vgl. Fig. 1b). Diese Angaben sind jedoch nicht beschränkend.

Der erste Container 3 weist eine erste Reinigungsvorrichtung 5 auf. Die erste Reinigungsvorrichtung 5 dient dazu, darin unterschiedlichste Teile zu reinigen, wie beispielsweise Fahrzeuge, Lager- und/oder Transportbehältnisse für Waren, Güter und Gegenstände aller Art wie Einkaufskörbe, Einkaufswagen, Servierwagen, Getränkekästen, Kisten, Fässer, Kessel, Tanks, Mülltonnen und/oder Behälter aller Art. Dazu weist die erste Reinigungsvorrichtung 5 vorzugsweise einen Waschtunnel bzw. eine Durchlaufwaschanlage oder dergleichen auf, durch den die Teile zur Reinigung hindurchgeführt werden.

Zur vorzugsweise automatisierten Reinigung der zugeführten Teile weist die erste Reinigungsvorrichtung 5 mehrere Vorrichtungen auf. Diese Vorrichtungen umfassen wenigstens eine oder mehrere Reinigungsstationen. Solche Reinigungsstationen sind beispielsweise aus der DE 101 31 398 B4 bekannt und sollen im Folgenden daher nur kurz erläutert werden.

Beispielsweise können in der ersten Reinigungsvorrichtung 5 die folgenden Reinigungsstationen oder wahlweise auch weniger oder mehr Stationen vorgesehen sein: eine erste Station aufweisend eine Ausblasvorrichtung, mit der Feststoffrückstände, Abfallreste und/oder Schmutzpartikel von dem zu reinigenden Teil ausgeblasen werden. In einer zweiten Station wird beispielsweise mittels Düsen ein chemisches Reinigungsmittel auf das zu reinigende Teil aufgebracht und wirkt ein. In den folgenden Reinigungsstationen kann nach eventuell zuvor zugeführten chemischen Reinigungsmitteln unter Mitwirkung von Hoch- und/oder Niederdruckwasser und/oder rotierenden, bewässerten Bürsten und/oder Hoch- und/oder Niederdruckdüsen das zu reinigende Teil beschleunigt gereinigt werden. Die komprimierten Wasserstrahlen werden dabei vorzugsweise aus rotierenden Hochdruckdüsen, die aus fünf Raumrichtungen auf die Teile einwirken, eingebracht. Die Bewässerung der rotierenden Bürsten geschieht vorzugsweise mit Recyclingwasser das besonders vorzugsweise mit speziellem Reinigungsmittel versetzt ist. In einer weiteren Station sind ferner vorzugsweise Düsen vorgesehen, mit denen ein Nachspülvorgang mit Hilfe von Niedrigdruckfrischwaser vorgenommen werden kann, um Rückstände von eventuell zugeführten chemischen Reinigungsmitteln zu entfernen. In einer oder mehreren weiteren Stationen kann ein Trocknen der Einkaufswagen durch Zuführen von Heißluft erfolgen. Abschließend kann ein chemisches Desinfektionsmittel zum Abtöten von Krankheitserregern auf die Teile aufgebracht werden. Zudem kann beispielsweise bei Einkaufswagen ein Aufbringen von Schmiermitteln auf die Radachsen zur Verminderung des Reibungswiderstands zwischen Rädern und Radachsen vorgenommen werden.

Sollten mehrere Vorrichtungen, also Reinigungsstationen, vorgesehen sein, so kann eine gegenseitige Beeinträchtigung der in den einzelnen Stationen durchgeführten Reinigungs-, Trocknungs-, Desinfektions- und Wartungsvorgänge bzw. eine unerwünschte Vermischung von Brauch- und Frischwasser sowie der verwendeten chemischen Reinigungs-und/oder Desinfektionsmittel sicher dadurch vermieden werden, dass zwischen den einzelnen Stationen der ersten Reinigungsvorrichtung 5 des mobilen Reinigungssystems 1 isolierende Trennwände eingebracht sind. Vorzugsweise sind die Trennwände in der Höhe verstellbar, seitlich klappbar oder aufrollbar.

Die erste Reinigungsvorrichtung 5 weist ferner einen Einlass 6 zum Einbringen C der zu reinigenden Teile sowie einen Auslass 7 zum Ausgeben D der gereinigten Teile auf. Wie in Figur 2a gezeigt, befinden sich Einlass 6 und Auslass 7 auf unterschiedlichen Seiten des ersten Containers 3, vorzugsweise auf sich gegenüberliegenden Seiten des ersten Containers 3. Somit ist es möglich, eine Durchlaufwaschanlage zur Verfügung zu stellen, die insbesondere besonders schmal ausgebildet ist.

Insbesondere bei kleinen zu reinigenden Teilen ist es jedoch auch denkbar, dass Einlass und Auslass auf einer, also derselben Seite, vorzugsweise einer Stirnseite des Containers 3 angeordnet sind. Somit werden die gereinigten Teile an derselben Stelle aus dem mobilen Reinigungssystem abgeführt, an der auch die verschmutzten Teile zugeführt werden. Dies hat den Vorteil, dass das mobile Reinigungssystem auf einfache Weise von nur einer Person bedient werden kann und die zu reinigenden Teile nur über kürzere Strecken außerhalb des mobilen Reinigungssystems 1 transportiert werden müssen.

Um die zu reinigenden Teile durch den ersten Container 3 bzw. die erste Reinigungsvorrichtung 5 zu befördern, weist die erste Reinigungsvorrichtung 5 eine Beförderungsvorrichtung, vorzugsweise eine automatische Beförderungsvorrichtung auf. Diese Vorrichtung ist besonders vorzugsweise eine bodenseitige und/oder deckenseitige Beförderungsvorrichtung 8 (in Figur 2b ist beispielhaft eine bodenseitige Beförderungsvorrichtung gezeigt), wobei auch andere Beförderungsvorrichtungen, wie beispielsweise ein Bandförderer, ein Kettenförderer, ein Hängeförderer, eine Linearführung oder dergleichen denkbar sind. Mittels der Beförderungsvorrichtung 8 wird es ermöglicht, die zu reinigenden Teile mit der entsprechenden Geschwindigkeit und ggf. unabhängig voneinander durch die erste Reinigungsvorrichtung 5 vorzugsweise im Wesentlichen horizontal zu befördern. Somit kann eine abgestimmte und taktweise Förderung der Teile ermöglicht und ein Reinigungsvorgang in Abhängigkeit der zu reinigenden Teile (Art, Größe, Form, Beschaffenheit) optimiert werden.

Sollten Einlass und Auslass auf derselben Seite des ersten Containers 3 vorgesehen sein, so ist die Beförderungsvorrichtung 8 vorzugsweise in einem im Wesentlichen horizontalen (und ggf. auch teilweise vertikalen), kurvigen Pfad (bspw. U-förmig) ausgebildet zur vorzugsweise kontinuierlichen Beförderung der zu reinigenden Teile durch die erste Reinigungsvorrichtung 5. Solche Beförderungsvorrichtungen sind beispielsweise aus der US 5,993,739 A bekannt.

Das mobile Reinigungssystem 1 weist ferner den zweiten Container 4 auf, der wiederum mit einer Versorgungseinheit (nicht gezeigt) versehen ist. Die Versorgungseinheit umfasst insbesondere Tanks für Frischwasser, Brauchwasser, Reinigungsmittel, Desinfektionsmittel, Schmiermittel und Heizöl sowie eine Pumpentechnik und einen Stromgenerator. Vorzugsweise ist in der Versorgungseinheit ebenfalls eine Wasserwiederaufbereitungsvorrichtung und eine Warmwasseraufbereitung (vorzugweise ein Durchlauferhitzer) zur Warmwassererzeugung vorgesehen. Um die erste Reinigungsvorrichtung 5 mit den entsprechenden Fluiden (Frischwasser, Brauchwasser, Reinigungsmittel, Desinfektionsmittel, Schmiermittel, Heizöl, Heißluft, Kühlluft) und Strom des Stromgenerators zu versorgen bzw. diese aus dem ersten Container 3 zur Entsorgung oder Wiederaufbereitung zu entnehmen, ist die erste Reinigungsvorrichtung 5 über Leitungen 9 ständig mit der Versorgungseinheit verbunden. Diese Leitungen 9 umfassen folglich vorzugsweise Zu- und Abführleitungen für die Fluide sowie elektrische Leitungen. Auf diese Weise wird die erste Reinigungsvorrichtung 5 in dem ersten Container 3 bei vollem Erhalt der Reinigungsleistung und -wirkung mit den entsprechenden Fluiden und Strom versorgt, ohne dass die Versorgungseinheit in dem ersten Container 3 integriert ist. Auf diese Weise ist der erste Container 3 besonders leicht und kann zudem kompakter ausgebildet werden, wodurch seine Handlingeigenschaften verbessert und sein Platzbedarf verringert wird.

Vorzugsweise weist der erste Container 3 eine oder mehrere Auffangwannen für die zuvor beschriebenen Reinigungsstationen auf, in der bzw. denen das abgeleitete Brauchwasser gesammelt wird und mittels der Leitungen 9 in einen Brauchwassertank in dem zweiten Container 4 geleitete werden kann. In der Auffangwanne ist vorzugsweise ein Grobsieb integriert sowie eine Überwachungseinheit, die dafür sorgt, dass ausgeblasene grobe Schmutzpartikel nicht in den Brauchwassertank gelangen oder die Zuleitungsrohre verstopfen. Diesem nachgeordnet ist eine Filtereinheit mit austauschbaren Filterelementen, um feine Schmutzpartikel aus dem Brauchwasser zu entfernen, bevor dieses in den Brauchwassertank gelangt, um für weitere Reinigungsvorgänge wiederverwendet werden zu können.

Es ist grundsätzlich denkbar, dass der erste Container 3 kleine Zwischentanks für Frischwasser, Brauchwasser, Reinigungsmittel, Desinfektionsmittel, Schmiermittel und dergleichen aufweist, über die eine Notversorgung der ersten Reinigungsanlage 5 sichergestellt ist, wenn bspw. eines der vorgenannten Fluide in den entsprechenden Haupttanks des zweiten Containers 4 aufgebraucht ist. Ebenso kann ein Notstromaggregat vorgesehen werden, dass kurzzeitig den Ausfall des Hauptstromgenerators übernimmt, wenn dieser bspw. mangels Treibstoff ausgefallen ist. Es ist festzuhalten, dass die Tanks bzw. wenigstens die schwereren Haupttanks und Aggregate außerhalb des ersten Containers 3 angeordnet sind, die erste Reinigungsvorrichtung 5 jedoch via Leitungen 9 mit den entsprechenden Fluiden und Strom versorgt wird, so dass bei verbesserten Handlingeigenschaften aufgrund geringeren Gewichts und kompakterer Bauweise die volle Reinigungsleistung erhalten bleibt.

Wie in den Figuren 2a und 2b zu erkennen ist, ist der erste Container 3 seitlich neben dem mobilen Träger 2 und parallel zu dessen Längsachse L2 sowie unabhängig von dem zweiten Container 4 derart absetzbar, dass er mit dem Boden in Berührung kommt bzw. auf dem Boden G absetzbar ist. Durch das Absetzen des ersten Containers 3 auf dem Boden G kann zum einen erreicht werden, dass die erste Reinigungsvorrichtung 5 einfach zugänglich ist, ohne beispielsweise zusätzliche Rampen und dergleichen vorzusehen. Des Weiteren ist das mobile Reinigungssystem 1 im Reinigungszustand, also in dem Zustand, in dem der erste Container 3 auf dem Boden G abgesetzt ist, besonders kompakt und benötigt wenig Raum. Dies wird, neben der Verlagerung der Versorgungseinheit in den zweiten Container 4, insbesondere dadurch erzielt, dass der erste Container 3 in Richtung seiner schmalen Quererstreckung im Vergleich zu seiner langen Längserstreckung abgesetzt wird und damit der horizontale Teil A der Absetzbewegung (A+B) deutlich verkürzt ist im Vergleich zu einem Fall, in dem der Container 3 längs der Längsachse L2 des Fahrzeugs 2, also nach hinten, abgesetzt wird.

Da überdies die Versorgungseinheit nicht in dem abzusetzenden ersten Container 3, der die erste Reinigungsvorrichtung 5 aufweist, enthalten ist, ist der erste Container 3 zudem deutlich leichter, sodass aufgrund des leichteren Containers 3 bei kürzerem Absetzweg (A+B) einerseits der Energieaufwand zum Absetzen des Containers 3 deutlich reduziert und andererseits das Absetzen des ersten Containers 3 zeitlich verkürzt und das mobile Reinigungssystem 1 somit schneller einsatzbereit ist.

Zudem müssen die zwischen der Versorgungseinheit und der ersten Reinigungsvorrichtung 5 vorgesehenen Leitungen 9 nur vergleichsweise kurz ausgelegt werden, insbesondere im Vergleich zu einem Reinigungssystem, in dem der Container nach hinten abgesetzt wird. Auf diese Weise kann auch wiederum die Pumpentechnik bzw. Pumpenanlage kleiner ausgebildet werden, da die zu überbrückenden Wege verkürzt sind. Um der Absetzbewegung (A+B) der Container 3, 4 ausreichend folgen zu können, sind die Leitungen 9 vorzugsweise flexibel ausgebildet, besonders vorzugsweise aus einem flexiblem, robusten und ggf. druckbeständigen und langlebigen Material hergestellt.

Um eine designtechnisch optimale Ausgestaltung des mobilen Reinigungssystems 1 zu erzielen, also um insbesondere einen möglichst schmalen und maximal langen Reinigungsweg der ersten Reinigungsvorrichtung 3 zu erzielen, erstrecken sich, wie in Figur 1a und 2a zu sehen, der erste Container 3 und der zweite Container 4 jeweils entlang der Längsachse L2 des mobilen Trägers 2, wobei der erste Container 3 auf einer der rechten oder linken Seiten des mobilen Träger 2 und der zweite Container 4 auf der anderen der linken oder rechten Seite des mobilen Trägers 2 angeordnet ist. Wie der Figur 2a insbesondere zu entnehmen ist, sind insbesondere die Längsachsen L3, L4 der beiden Container 3, 4 bezüglich der Längsachse L2 des mobilen Trägers 2 auf gegenüberliegenden Seiten desselben angeordnet. Somit ist es auch einfach möglich, den ersten Container 3 seitlich abzusetzen.

In einer bevorzugten Ausführungsform weist der zweite Container 4 ferner wenigstens eine zweite Reinigungsvorrichtung (nicht gezeigt) auf, die ebenfalls mit der Versorgungseinheit über Leitungen ständig verbunden ist. Diese zweite Reinigungsvorrichtung umfasst vorzugsweise weitere Reinigungsgeräte, wie beispielsweise tragbare Reinigungsgeräte in Form eines Hochdruckreinigers oder Bodenreinigungsmaschinen, Trockeneis- und Trockendampfgeräte oder dergleichen. Es ist somit möglich, neben der ersten Reinigungsvorrichtung 5, in der die zu reinigenden Teile beispielsweise in Form einer Durchlaufwaschanlage gereinigt werden, zusätzliche Reinigungsvorrichtungen vorzusehen, mit denen beispielsweise vor Ort weitere Reinigungsvorgänge, wie beispielsweise das Reinigen von Werbeschildern und dergleichen, vorgenommen werden kann. Mit der zweiten Reinigungsvorrichtung ist es zudem auch möglich, die in der ersten Reinigungsvorrichtung zu reinigenden Teile beispielsweise vor- oder nachzubehandeln.

In einer besonders bevorzugten Ausführungsform ist wenigstens der Teil des zweiten Containers 4, der die zweite Reinigungsvorrichtung aufweist, ebenfalls seitlich neben dem mobilen Träger 2 und parallel zu dessen Längsachse L2 derart absetzbar, dass er mit dem Boden G in Berührung kommt. Auf diese Weise ist es möglich, auch die zweite und weitere Reinigungsvorrichtungen in leicht zugänglicher Weise bereitzustellen. Vorzugsweise verbleibt die Versorgungseinheit dazu immer auf dem mobilen Träger 2 und ist mit diesem fix verbunden, unabhängig davon, welche der Reinigungsvorrichtungen auf dem Boden G abgesetzt wird. Durch die zwischen der Versorgungseinheit und der jeweiligen Reinigungsvorrichtung vorgesehenen Leitungen besteht die Versorgung der Reinigungsvorrichtung ständig und ohne Leistungsverluste fort.

Damit die Reinigungsvorrichtungen jederzeit gut zugänglich sind, sind der erste Container 3 und wenigstens der die zweite Reinigungsvorrichtung aufweisende Teil des zweiten Containers 4 auf gegenüberliegenden Seiten des mobilen Trägers 2, also bezüglich dessen Längsachse L2, absetzbar.

Um die Container 3, 4 bzw. den die zweite Reinigungsvorrichtung aufweisenden Teil des zweiten Containers 4 abzusetzen, weist das mobile Reinigungssystem 1 einen Absetzmechanismus 10 auf. Dieser Absetzmechanismus 10 ist vorzugsweise eine Hydraulikvorrichtung zum seitlichen Absetzen der Container 3, 4 bzw. Teile der Container 4 von dem mobilen Träger 2. Dazu weist der Absetzmechanismus 10 vorzugsweise gelenkig verbundene Arme auf, die einen optimalen und möglichst kurzen Absetzweg der jeweiligen Container(-teile) 3, 4 von dem mobilen Träger 2 ermöglichen.

In einer bevorzugten Ausführungsform bleiben die abgesetzten (Teile der) Container 3, 4 mit dem mobilen Träger 2 verbunden. Dies geschieht vorzugsweise mittels des Absetzmechanismus 10 und zusätzlich mittels der Leitungen 9. Auf diese Weise wird es ermöglicht, dass das mobile Reinigungssystem 1 auch zu Zeiten des geregelten Feiertags- und Sonntagsfahrverbots für LKWs eingesetzt werden kann. Zudem können die Container 3, 4 auch schneller wieder auf den mobilen Träger 2 heraufgehoben werden, wodurch die Standzeiten verkürzt werden.

Die zeitliche Koordinierung und Steuerung der Zu- und Abführung der zu reinigenden Teile in bzw. aus dem ersten Container 3 sowie die Arbeitsabläufe in den einzelnen Reinigungsstationen des mobilen Reinigungssystems 1 wird nach dem bevorzugten Ausführungsbeispiel der zu Grunde liegenden Erfindung von einem zentralen Regelungs- und Steuerungssystem durchgeführt, dass außerdem die für die Reinigung der Teile erforderlichen Randbedingungen regelt.

Bei diesen Randbedingungen kann es sich beispielsweise um die Zuführmenge von Frischwasser, Schmiermitteln und/oder chemischen Reinigungs- bzw. Desinfektionsmitteln, die Abführmenge von Brauchwasser sowie physikalische Parameter wie Temperatur und/oder Druck von Frischwasser, Brauchwasser, Schmiermitteln und/oder chemischer Reinigungs- bzw. Desinfektionsmitteln und die Zeitpunkte der Zu- bzw. Abführung dieser Flüssigkeiten handeln.

Des Weiteren ist vorzugsweise, wie bereits beschrieben, auch eine Wasserwiederaufbereitungsanlage vorgesehen, insbesondere in der Versorgungseinheit des zweiten Containers 4. Die Wasserwiederaufbereitungsanlage reinigt unter Zuhilfenahme von chemischen und/oder biologischen Zusätzen das nach jedem Reinigungsvorgang angefallene und aufgefangene Brauchwasser, damit es für weitere Reinigungsvorgänge wieder verwendet werden kann. Dazu sind mindestens je eine Auffangwanne, ein Gitter, ein grobes Sieb und/oder ein Filter mit austauschbaren Filterelementen zum Sammeln von Brauchwasser und Auffangen darin befindlicher grober und/oder feiner Schmutzpartikel vorgesehen, um zu gewährleisten, dass das vorzugsweise aus dem Sammelbehälter des ersten Containers 3 zu der Wiederaufbereitungsanlage in der Versorgungseinheit des zweiten Containers 4 abgeleitete und gereinigte Brauchwasser nach Rückführung in die erste Reinigungsvorrichtung 5 bzw. weitere Reinigungsvorrichtungen zur Reinigung von zu reinigenden Teilen wieder verwendet werden kann.

Um das mobile Reinigungssystem 1 vor Frosteinwirkung zu schützen, kann zusätzlich eine Heizvorrichtung mit Temperaturüberwachung vorgesehen sein.

Die Versorgungseinheit weist also vorzugsweise insbesondere auf: eine Vielzahl von Pumpen für die Zuführung bzw. Abführung von Frisch- bzw. Brauchwasser, Reinigungs-, Desinfektions- und Schmiermitteln; eine Vielzahl von Ventilen als Rückschlagsicherungen, Absperrvorrichtungen und/oder Druckverminderern; Filter zur Reinigung des verschmutzten Brauchwassers; Leitungen 9 für die Zuführung bzw. Abführung von Frisch- bzw. Brauchwasser, Reinigungs-, Desinfektions- und Schmiermitteln; Behälter bzw. Tanks zur Speicherung von Frisch- bzw. Brauchwasser, Reinigungs-, Desinfektions- und Schmiermittel sowie Heizöl; Messgeräte zur Füllstands-, Temperatur- und Druckmessung; eine Vorrichtung zur Regelung der Betriebstemperatur; eine Gebläsevorrichtung zur Bereitstellung von Luft zum Ausblasen von feinen Schmutzpartikeln; eine Gebläsevorrichtung zur Bereitstellung von Heißluft für die Trocknungsvorgänge sowie ggf. eine Wasserwiederaufbereitungsanlage zur Reinigung des verschmutzten Brauchwassers. Die meisten der vorgenannten Komponenten sind in den Figuren aus Übersichtlichkeitsgründen nicht dargestellt.

Des Weiteren kann in der ersten Reinigungsvorrichtung ein vorzugsweise automatischer Vereinzelungsmechanismus vorgesehen werden, der mit Hilfe pneumatisch bzw. hydraulisch betätigter Rückhaltezylinder bzw. Mitnahmezylinder ausgestattet ist, die vorzugsweise quer zur Längsachse eines Zylinders angebracht sind, welcher zur Längsbeförderung der zu reinigenden Teile dient. Der Zylinder verfügt dabei über vorzugsweise zwei Mitnahmezylinder, die hinter das zu reinigende Teil, beispielsweise hinter den vier Rädern eines in die mobile Reinigungsvorrichtung hinein zu befördernden Einkaufswagens, eingreifen. Hat der Zylinder nach der Längsbeförderung eines zu reinigenden Teils seine Anschlagposition erreicht, befindet sich wenigstens ein Teil des zu reinigenden Teils derart auf der Beförderungsvorrichtung 8, dass er von dieser in die erste Reinigungsvorrichtung 5 bzw. den Waschtunnel weiter transportiert wird. Die Rückhaltezylinder halten während der Betätigung des Zylinders das nächste zu reinigende Teil in seiner Position, damit dessen Vorgänger der ersten Reinigungsvorrichtung 5 zugeführt werden kann. Ist das erste zu reinigende Teil in der mobilen Reinigungsvorrichtung 5, geben die Rückhaltezylinder das nächste zu reinigende Teil frei, damit es in die Anschlagposition gebracht werden kann. Zur Mitnahme der zu reinigenden Teile ist die Beförderungsvorrichtung 8 mit speziellen Mitnehmereinheiten ausgestattet, mit deren Hilfe die zu reinigenden Teile durch die erste Reinigungsvorrichtung 5 hindurch befördert werden. Diese Mitnehmereinheiten greifen vorzugsweise hinter entsprechende Teile der zu reinigenden Teile, beispielsweise greifen sie hinter den Rädern eines Einkaufswagens ein. Es ist grundsätzlich jedoch auch möglich, die Einkaufswagen (bzw. die zu reinigenden Teile) manuell durch den Bediener oder halbautomatisch einzeln oder im Pulk in die Anlage einzuführen und/oder nach dem Reinigungsvorgang am Ende der Anlage einzeln oder im Pulk abzunehmen.

Zur autarken Energieversorgung aller elektrisch, hydraulisch und/oder pneumatisch betriebener Zuführungs-, Reinigungs- und Abführungsvorrichtungen für die zu reinigenden Teile ist vorzugsweise der mindestens eine Stromgenerator vorgesehen, um gewährleisten zu können, dass das mobile Reinigungssystem 1 unabhängig von Fremdenergiequellen betrieben werden kann. Der Stromgenerator ist, wie bereits zuvor beschrieben, vorzugsweise in der Versorgungseinheit vorgesehen und mittels elektrischer Kabelverbindung mit den jeweiligen Reinigungsvorrichtungen verbunden. In den Reinigungsvorrichtungen können darüber hinaus ggf. Notstromaggregate vorgesehen sein. Auch ist es möglich, die Energieversorgung durch eine externe Stromquelle am Einsatzort sicherzustellen.

Diese zu Grunde liegende Erfindung ist, wie ein auf diesem Gebiet tätiger Durchschnittsfachmann leicht erkennen kann, nicht nur auf das oben beschriebene Ausführungsbeispiel beschränkt. Über die darin offenbarten Merkmale hinaus sind zahlreiche Modifikationen und Variationen möglich, ohne substantiell von dem Anwendungsbereich der vorliegenden Erfindung abzuweichen, wie in den Patentansprüchen offenbart ist.

## Patentansprüche

1. Mobiles Reinigungssystem für zu reinigende Teile, aufweisend:
einen ersten Container (3), welcher eine erste Reinigungsvorrichtung (5) aufweist,
einen zweiten Container (4) mit einer Versorgungseinheit, die mit der ersten Reinigungsvorrichtung (5) über Leitungen (9) ständig verbunden ist, und einen mobilen Träger (2), auf dem der erste Container (3) und der zweite Container (4) vorgesehen sind,
wobei wenigstens der erste Container (3) seitlich neben dem mobilen Träger (2) und parallel zu dessen Längsachse (L2) sowie unabhängig von dem zweiten Container (4) derart absetzbar ist, dass er mit dem Boden (G) in Berührung kommt.

2. Mobiles Reinigungssystem nach Anspruch 1, wobei der zweite Container (4) ferner wenigstens eine zweite Reinigungsvorrichtung aufweist, die mit der Versorgungseinheit über Leitungen ständig verbunden ist,
wobei vorzugsweise wenigstens der die zweite Reinigungsvorrichtung aufweisende Teil des zweiten Containers (4) seitlich neben dem mobilen Träger (2) und parallel zu dessen Längsachse (L2) derart absetzbar ist, dass er mit dem Boden (G) in Berührung kommt, und
wobei der erste Container (3) und wenigstens der die zweite Reinigungsvorrichtung aufweisende Teil des zweiten Containers (4) vorzugsweise auf gegenüberliegenden Seiten des mobilen Trägers (2) absetzbar sind.

3. Mobiles Reinigungssystem nach Anspruch 2, wobei der erste Container (3) und der zweite Container (4) sich jeweils entlang der Längsachse (L2) des mobilen Trägers (2) erstrecken, wobei die Längsachse (L3) des ersten Containers auf einer der rechten oder linken Seite bzgl. der Längsachse (L2) des mobilen Trägers (2) und die Längsachse (L4) des zweiten Containers (4) auf der anderen der linken oder rechten Seite bzgl. der Längsachse (L2) des mobilen Trägers (2) angeordnet ist.

4. Mobiles Reinigungssystem nach einem der vorhergehenden Ansprüche, wobei das mobile Reinigungssystem einen Absetzmechanismus (10), vorzugsweise eine Hydraulikvorrichtung, zum seitlichen Absetzen der Container (3, 4) bzw. Teile der Container (4) von dem mobilen Träger (2) aufweist.

5. Mobiles Reinigungssystem nach einem der vorhergehenden Ansprüche, wobei die abgesetzten (Teile der) Container (3, 4) mit dem mobilen Träger (2) verbunden bleiben, vorzugsweise mittels des Absetzmechanismus (10).

6. Mobiles Reinigungssystem nach einem der vorhergehenden Ansprüche, wobei die erste Reinigungsvorrichtung einen Waschtunnel aufweist.

7. Mobiles Reinigungssystem nach einem der vorhergehenden Ansprüche, wobei die erste Reinigungsvorrichtung mehrere Vorrichtungen zum automatisierten Reinigen der zugeführten Teile aufweist.

8. Mobiles Reinigungssystem nach einem der vorhergehenden Ansprüche, wobei die erste Reinigungsvorrichtung eine Beförderungsvorrichtung, vorzugsweise eine automatische boden- und/ oder deckenseitige Beförderungsvorrichtung (8) aufweist.

9. Mobiles Reinigungssystem nach einem der vorhergehenden Ansprüche, wobei die erste Reinigungsvorrichtung einen Einlass (6) zum Einbringen der zu reinigenden Teile und einen Auslass (7) zum Ausgeben der gereinigten Teile aufweist,
wobei vorzugsweise Einlass (6) und Auslass (7) auf einer Seite oder auf unterschiedlichen, vorzugsweise sich gegenüberliegenden Seiten des ersten Containers (3) angeordnet sind.

10. Mobiles Reinigungssystem nach einem der vorhergehenden Ansprüche, wobei die zweite Reinigungsvorrichtung (tragbare) Reinigungsgeräte aufweist, wie bspw. Hochdruckreiniger, Bodenreinigungsmaschinen, Trockeneis- und Trockendampfgeräte.

11. Mobiles Reinigungssystem nach einem der vorhergehenden Ansprüche, wobei die Versorgungseinheit Tanks für Frischwasser, Brauchwasser, Reinigungsmittel, Desinfektionsmittel, Schmiermittel und Heizöl sowie eine Pumpentechnik, einen Stromgenerator, eine Wasserwiederaufbereitungsvorrichtung und einen Durchlauferhitzer aufweist, und die mit den absetzbaren Containern oder Teilen der Container verbundenen Leitungen (9) Zu- und Abführleitungen für Fluide sowie elektrische Leitungen umfasst.

12. Mobiles Reinigungssystem nach einem der vorhergehenden Ansprüche, wobei die zu reinigenden Teile umfassen:
Fahrzeuge, Lager- und/oder Transportbehältnisse für Waren, Güter und Gegenstände aller Art wie Einkaufskörbe, Einkaufswagen, Servierwagen, Paletten, Getränkekästen, Kisten, Fässer, Kessel, Tanks, Mülltonnen und/oder Behälter aller Art.

13. Mobiles Reinigungssystem nach einem der vorhergehenden Ansprüche, wobei der mobile Träger (2) ein Fahrzeug ist, vorzugsweise ein Transporter oder Klein-Lastkraftwagen mit einem zulässigen Gesamtgewicht von maximal 12 Tonnen, vorzugsweise maximal 7,5 Tonnen.

14. Verfahren zum Bereitstellen eines mobilen Reinigungssystems für zu reinigende Teile, aufweisend den folgenden Schritt:
Absetzen wenigstens eines ersten Containers (3), welcher eine erste Reinigungsvorrichtung (5) aufweist, seitlich neben einem mobilen Träger (2), auf dem der erste Container (3) und ein zweiter Container (4) mit einer Versorgungseinheit, die mit der ersten Reinigungsvorrichtung (5) über Leitungen (9) ständig verbunden ist, vorgesehen sind, und parallel zu dessen Längsachse (L2) sowie unabhängig von dem zweiten Container (4) derart, dass er mit dem Boden (G) in Berührung kommt.

15. Verfahren gemäß Anspruch 14, wobei der zweite Container (4) ferner wenigstens eine zweite Reinigungsvorrichtung aufweist, die mit der Versorgungseinheit über Leitungen ständig verbunden ist, aufweisend den folgenden Schritt:
Absetzen wenigstens des die zweite Reinigungsvorrichtung aufweisende Teils des zweiten Containers (4) seitlich neben dem mobilen Träger (2) und parallel zu dessen Längsachse (L2) derart, dass er mit dem Boden (G) in Berührung kommt,
wobei vorzugsweise der erste Container (3) und wenigstens der die zweite Reinigungsvorrichtung aufweisende Teil des zweiten Containers (4) auf gegenüberliegenden Seiten des mobilen Trägers (2) abgesetzt werden,
wobei sich hierzu ferner vorzugsweise der erste Container (3) und der zweite Container (4) jeweils entlang der Längsachse (L2) des mobilen Trägers (2) erstrecken und die Längsachse (L3) des ersten Containers auf einer der rechten oder linken Seite bzgl. der Längsachse (L2) des mobilen Trägers (2) und die Längsachse (L4) des zweiten Containers (4) auf der anderen der linken oder rechten Seite bzgl. der Längsachse (L2) des mobilen Trägers (2) angeordnet ist.

## Claims

1. Mobile cleaning system for parts to be cleaned, having:
a first container (3) which has a first cleaning device (5),
a second container (4) having a supply unit which is continuously connected to the first cleaning device (5) via lines (9), and
a mobile carrier (2) on which the first container (3) and the second container (4) are provided,
wherein at least the first container (3) can be deposited laterally next to the mobile carrier (2) and parallel to the longitudinal axis (L2) thereof and also independently of the second container (4) in such a manner that it comes into contact with the ground (G).

2. Mobile cleaning system according to Claim 1, wherein the second container (4) furthermore has at least one second cleaning device which is continuously connected to the supply unit via lines,
wherein preferably at least that part of the second container (4) which has the second cleaning device can be deposited laterally next to the mobile carrier (2) and parallel to the longitudinal axis (L2) thereof in such a manner that it comes into contact with the ground (G), and
wherein the first container (3) and at least that part of the second container (4) which has the second cleaning device can preferably be deposited on opposite sides of the mobile carrier (2).

3. Mobile cleaning system according to Claim 2, wherein the first container (3) and the second container (4) each extend along the longitudinal axis (L2) of the mobile carrier (2), wherein the longitudinal axis (L3) of the first container is arranged on one side out of the right or left side with respect to the longitudinal axis (L2) of the mobile carrier (2) and the longitudinal axis (L4) of the second container (4) is arranged on the other side out of the left or right side with respect to the longitudinal axis (L2) of the mobile carrier (2).

4. Mobile cleaning system according to one of the preceding claims, wherein the mobile cleaning system has a depositing mechanism (10), preferably a hydraulic device, for the depositing of the containers (3, 4) or parts of the containers (4) to the side of the mobile carrier (2).

5. Mobile cleaning system according to one of the preceding claims, wherein the deposited (parts of the) containers (3, 4) remain connected to the mobile carrier (2), preferably by means of the depositing mechanism (10).

6. Mobile cleaning system according to one of the preceding claims, wherein the first cleaning device has a wash tunnel.

7. Mobile cleaning system according to one of the preceding claims, wherein the first cleaning device has a plurality of devices for the automated cleaning of the supplied parts.

8. Mobile cleaning system according to one of the preceding claims, wherein the first cleaning device has a conveying device, preferably an automatic ground-side and/or overhead conveying device (8).

9. Mobile cleaning system according to one of the preceding claims, wherein the first cleaning device has an inlet (6) for the introduction of the parts to be cleaned, and an outlet (7) for discharging the cleaned parts,
wherein inlet (6) and outlet (7) are preferably arranged on one side or on different, preferably opposite sides of the first container (3).

10. Mobile cleaning system according to one of the preceding claims, wherein the second cleaning device has (portable) cleaning appliances, such as, for example, high pressure cleaners, floor cleaning machines, dry ice and dry steam appliances.

11. Mobile cleaning system according to one of the preceding claims, wherein the supply unit has tanks for fresh water, service water, cleaning agent, disinfectant, lubricant and heating oil, and also pumping technology, a power generator, a water reprocessing device and an instantaneous water heater, and the lines (9) which are connected to the depositable containers or parts of the containers comprises supply and discharge lines for fluids and electric lines.

12. Mobile cleaning system according to one of the preceding claims, wherein the parts to be cleaned comprise:
vehicles, storage and/or transport containers for merchandise, goods and objects of all types, such as shopping baskets, shopping trolleys, serving trolleys, pallets, crates of beverages, boxes, vessels, boilers, tanks, dustbins and/or containers of all types.

13. Mobile cleaning system according to one of the preceding claims, wherein the mobile carrier (2) is a vehicle, preferably a transporter or van having a permissible overall weight of at maximum 12 tonnes, preferably of at maximum 7.5 tonnes.

14. Method for providing a mobile cleaning system for parts to be cleaned, having the following step:
depositing at least one first container (3), which has a first cleaning device (5), laterally next to a mobile carrier (2) on which the first container (3) and a second container (4) are provided with a supply unit, which is connected continuously to the first cleaning device (5) via lines (9), and parallel to the longitudinal axis (L2) of said mobile carrier and independently of the second container (4) in such a manner that is comes into contact with the ground (G).

15. Method according to Claim 14, wherein the second container (4) furthermore has at least one second cleaning device, which is continuously connected to the supply unit via lines, having the following step:
depositing at least that part of the second container (4) which has the second cleaning device laterally next to the mobile carrier (2) and parallel to the longitudinal axis (L2) thereof in such a manner that it comes into contact with the ground (G),
wherein preferably the first container (3) and at least that part of the second container (4) which has the second cleaning device are deposited on opposite sides of the mobile carrier (2),
wherein, for this purpose, the first container (3) and the second container (4) furthermore preferably each extend along the longitudinal axis (L2) of the mobile carrier (2), and the longitudinal axis (L3) of the first container is arranged on one side out of the right or left side with respect to the longitudinal axis (L2) of the mobile carrier (2) and the longitudinal axis (L4) of the second container (4) is arranged on the other side out of the left or right side with respect to the longitudinal axis (L2) of the mobile carrier (2).

## Revendications

1. Système de nettoyage mobile pour pièces à nettoyer, comprenant :
un premier conteneur (3) qui possède un premier dispositif de nettoyage (5),
un deuxième conteneur (4) muni d'une unité d'alimentation qui est en liaison permanente avec le premier dispositif de nettoyage (5) par le biais de conduites (9), et un support mobile (2) sur lequel se trouvent le premier conteneur (3) et le deuxième conteneur (4),
au moins le premier conteneur (3) pouvant être déposé latéralement à côté du support mobile (2) et parallèlement à son axe longitudinal (L2) ainsi qu'indépendamment du deuxième conteneur (4) de telle sorte qu'il entre en contact avec le sol (G).

2. Système de nettoyage mobile selon la revendication 1, le deuxième conteneur (4) possédant en plus au moins un deuxième dispositif de nettoyage qui est en liaison permanente avec l'unité d'alimentation par le biais de conduites,
de préférence au moins la partie du deuxième conteneur (4) qui possède le deuxième dispositif de nettoyage pouvant être déposée latéralement à côté du support mobile (2) et parallèlement à son axe longitudinal (L2) de telle sorte qu'elle entre en contact avec le sol (G), et
le premier conteneur (3) et au moins la partie du deuxième conteneur (4) qui possède le deuxième dispositif de nettoyage pouvant être déposés de préférence sur des côtés opposés du support mobile (2).

3. Système de nettoyage mobile selon la revendication 2, le premier conteneur (3) et le deuxième conteneur (4) s'étendant respectivement le long de l'axe longitudinal (L2) du support mobile (2), l'axe longitudinal (L3) du premier conteneur étant disposé sur l'un des côtés droit ou gauche relativement à l'axe longitudinal (L2) du support mobile (2) et l'axe longitudinal (L4) du deuxième conteneur (4) sur l'autre des côtés droit ou gauche relativement à l'axe longitudinal (L2) du support mobile (2).

4. Système de nettoyage mobile selon l'une des revendications précédentes, le système de nettoyage mobile possédant un mécanisme de dépose (10), de préférence un dispositif hydraulique destiné à la dépose latérale des conteneurs (3, 4) ou de parties du conteneur (4) depuis le support mobile (2).

5. Système de nettoyage mobile selon l'une des revendications précédentes, les (parties de) conteneurs (3, 4) déposé(e)s restant liés au support mobile (2), de préférence au moyen du mécanisme de dépose (10).

6. Système de nettoyage mobile selon l'une des revendications précédentes, le premier dispositif de nettoyage possédant un tunnel de lavage.

7. Système de nettoyage mobile selon l'une des revendications précédentes, le premier dispositif de nettoyage possédant plusieurs dispositifs servant au nettoyage automatisé des pièces acheminées.

8. Système de nettoyage mobile selon l'une des revendications précédentes, le premier dispositif de nettoyage possédant un dispositif de convoyage, de préférence un dispositif de convoyage (8) automatique du côté du sol et/ou du plafond.

9. Système de nettoyage mobile selon l'une des revendications précédentes, le premier dispositif de nettoyage possédant une entrée (6) destinée à l'introduction des pièces à nettoyer et une sortie (7) destinée à la délivrance des pièces nettoyées,
l'entrée (6) et la sortie (7) étant de préférence disposées d'un côté ou sur des côtés différents, de préférence mutuellement opposés, du premier conteneur (3).

10. Système de nettoyage mobile selon l'une des revendications précédentes, le deuxième dispositif de nettoyage possédant des appareils de nettoyage (portables) comme, par exemple, des nettoyeurs à haute pression, des nettoyeuses de plancher, des appareils à glace sèche et à vapeur sèche.

11. Système de nettoyage mobile selon l'une des revendications précédentes, l'unité d'alimentation possédant des réservoirs pour de l'eau fraîche, de l'eau industrielle, du détergent, du désinfectant, du lubrifiant et du mazout ainsi qu'un équipement technique de pompage, un générateur d'électricité, un dispositif de reconditionnement d'eau et un chauffe-eau instantané, et les conduites (9) reliées aux conteneurs ou parties de conteneurs pouvant être déposés comprend des conduites d'arrivée et de départ pour les fluides ainsi que des câbles électriques.

12. Système de nettoyage mobile selon l'une des revendications précédentes, les pièces à nettoyer comprenant :
des véhicules, des récipients de stockage et/ou de transport pour des produits, des marchandises et des objets de toutes natures comme des paniers de supermarché, des chariots de supermarché, des chariots de desserte, des palettes, des caisses à boissons, des boîtes, des fûts, des cuves, des réservoirs, des poubelles et/ou des récipients de toutes natures.

13. Système de nettoyage mobile selon l'une des revendications précédentes, le support mobile (2) étant un véhicule, de préférence une fourgonnette ou un petit véhicule utilitaire ayant un poids total autorisé à charge maximum de 12 tonnes, de préférence maximum de 7,5 tonnes.

14. Procédé de mise à disposition d'un système de nettoyage mobile pour pièces à nettoyer, comprenant l'étape suivante :
dépose d'au moins un premier conteneur (3), lequel possède un premier dispositif de nettoyage (5), latéralement à côté d'un support mobile (2) sur lequel se trouvent le premier conteneur (3) et un deuxième conteneur (4) muni d'une unité d'alimentation qui est en liaison permanente avec le premier dispositif de nettoyage (5) par le biais de conduites (9), et parallèlement à son axe longitudinal (L2) ainsi qu'indépendamment du deuxième conteneur (4) de telle sorte qu'il entre en contact avec le sol (G).

15. Procédé selon la revendication 14, le deuxième conteneur (4) possédant en plus au moins un deuxième dispositif de nettoyage qui est en liaison permanente avec l'unité d'alimentation par le biais de conduites, comprenant l'étape suivante :
dépose d'au moins la partie du deuxième conteneur (4) qui possède le deuxième dispositif de nettoyage latéralement à côté du support mobile (2) et parallèlement à son axe longitudinal (L2) de telle sorte qu'elle entre en contact avec le sol (G),
le premier conteneur (3) et au moins la partie du deuxième conteneur (4) qui possède le deuxième dispositif de nettoyage pouvant être déposés de préférence sur des côtés opposés du support mobile (2),
le premier conteneur (3) et le deuxième conteneur (4) s'étendant en outre à cet effet de préférence respectivement le long de l'axe longitudinal (L2) du support mobile (2) et l'axe longitudinal (L3) du premier conteneur étant disposé sur l'un des côtés droit ou gauche relativement à l'axe longitudinal (L2) du support mobile (2) et l'axe longitudinal (L4) du deuxième conteneur (4) sur l'autre des côtés droit ou gauche relativement à l'axe longitudinal (L2) du support mobile (2).
